# EUROPEAN PATENT APPLICATION

(11) **EP 4 650 408 A1**
(43) Date of publication of application: **19.11.2025**
(21) Application number: 25172956.2
(22) Date of filing: 28.04.2025
(51) Int. Cl.: C09D 183/16, C08G 77/62

(54) **COATING COMPOSITION**

(30) Priority: 16.05.2024 JP 2024080484
(71) Applicant: Shin-Etsu Chemical Co., Ltd., Tokyo 100-0005 (JP)
(72) Inventor: Kaneko, Tatsuro, Annaka-shi, Gunma (JP)
(74) Representative: Schicker, Silvia

(57) **Abstract**

The present invention is a coating composition including the following (A), (B), and (C).
(A) A polysilazane compound having a repeating structure represented by the following formula (1). 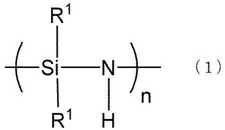 In the formula, R¹ independently represents a hydrogen atom or a group selected from an aliphatic hydrocarbon group having 1 to 6 carbon atoms, an aromatic hydrocarbon group having 6 to 12 carbon atoms, and an alkoxy group having 1 to 6 carbon atoms. "n" represents an integer of 2 to 20,000.
(B) A surfactant represented by the following formula (2). 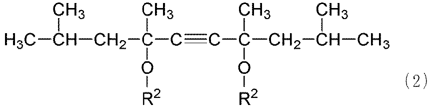 In the formula, R² independently represents a hydrogen atom or a group selected from an aliphatic hydrocarbon group having 1 to 6 carbon atoms, an ω-hydroxyalkyl group having 1 to 12 carbon atoms, and an ω-alkoxyalkyl group having 2 to 12 carbon atoms.
(C) An organic solvent. This can provide a coating composition that can uniformly form an inorganic film with a polysilazane on an organic resin film without defects such as pinholes.

## Description

### TECHNICAL FIELD

The present invention relates to a coating composition.

### BACKGROUND ART

The latest electronic materials represented by organic ELs, all-solid batteries, and perovskite solar cells are not mere improvement of the conventional art but constituted with completely novel materials or concepts. These are art newly devised and developed in recent years in order to break through latent performance limit and weakness on the material constitution of the conventional art. Specifically, a conventional liquid crystal monitor having a light-emitting portion constituted with an inorganic material is not foldable and heavy, leading to no portability even with display enlargement. Thus, for a purpose of imparting flexibility and a lightweight property, the organic EL using an organic fluorescent substance has been developed. The conventional secondary battery using a liquid electrolyte has had problems of leakage of the electrolyte due to aging, etc., and ignition due to overcharge. To solve these problems, the all-solid battery using a noninflammable solid electrolyte has been developed.

As the above examples, the latest electronic materials use completely different structures or materials in order to solve the latent problems of the conventional products. Thus, there are some objects that the conventional products do not have. Amang them, an object specifically regarded as commonly importance is water-resistance. The materials newly used for these latest electronic materials are generally extremely weak in water. To achieve a certain extent of durability over several years, high gas-barrier performance with low water-vapor permeability at room temperature is required. However, the conventional art has the following problems.

To achieve this high gas-barrier performance, a method of sandwiching and sealing with glass plates is proposed (Patent Document 1). This method can achieve relatively inexpensive sealing, resulting in an excellent cost aspect. This method is, however, unusable for the devices having advantages of flexibility and a lightweight property, such as the organic EL and the perovskite solar cell, because these advantages disappear. Although there is a method of sealing with metal foil, etc., this method is unusable for the devices requiring light transmittance inside and outside the devices, such as the organic EL and the perovskite solar cell, because the metal foil eliminates light transmittance.

A method of lamination with an organic film subjected to a high gas-barrier treatment instead of glass or metal foil is also proposed (Patent Document 2). In this method, an inorganic film such as SiO₂ and Si₃N₄ is formed by CVD on a film having light transmittance and flexibility, such as polyethylene terephthalate (PET), in advance. This method is preferable in a property aspect because the light transmittance and the flexibility can be achieved compared with the case of direct sealing with inorganic glass or metal. Meanwhile, the CVD film formation is required for a plurality of layers in order to impart the high gas-barrier performance, and the method has a problem of a considerably high cost. The thin film of SiO₂, Si₃N₄, etc. formed by CVD film formation has flexibility at a certain extent but weak in strong folding, etc. and has a problem of durability.

To solve this problem, use of polysilazane instead of the CVD film formation is proposed (Patent Document 3). The polysilazane enables wet coating because the polysilazane is a polymer soluble in a solvent before curing and forms an inorganic film of SiO₂ or SiOxNy after curing. Compared with CVD, which is dry coating, the wet coating has an advantage of a good yield because the coating can be performed above dusts such as particles adhering onto the film. Furthermore, since the formation of a high gas barrier film by CVD must be carried out in a vacuum state, the production is carried out in a batch manner, and this is a factor of increasing costs. Although atmospheric CVD does not require reduction in pressure and can shorten the time for forming the film compared with pressure-reducing CVD, dusts tend to be generated, and unsuitable for forming the high gas-barrier film. From the viewpoints of the producing cost and the yield, the forming inorganic film with the polysilazane is preferable. However, in the wet coating, film defects such as pinholes need to be considered ,because film uniformity significantly depends on wettability between a coating liquid and a substrate. In particular, a higher gas barrier requires fewer film defects, and thus it is performed in many cases that a surface-modifying treatment such as an Ar plasma treatment on the substrate in advance and a method of applying a polysilazane solution being the coating liquid a plurality of times. These countermeasures have a certain level of effect but the effect is limited, and still insufficient for forming the high gas-barrier film.

To solve the above problems, there has been a demand for providing a coating composition that can uniformly form an inorganic film of the polysilazane without defects etc. on an organic resin film.

### CITATION LIST

### PATENT LITERATURE

Patent Document 1: JP 2020-88077 A
Patent Document 2: JP 2016-87815 A
Patent Document 3: JP 2018-177859 A

### SUMMARY OF INVENTION

### TECHNICAL PROBLEM

The present invention has been made to solve the above problems. An object of the present invention is to provide a coating composition that can uniformly form an inorganic film of the polysilazane on an organic resin film without defects such as pinholes.

### SOLUTION TO PROBLEM

To solvent the above problems, the present invention provides a coating composition having the following feature.

A coating composition including:
(A) a polysilazane compound having a repeating structure represented by the following formula (1); 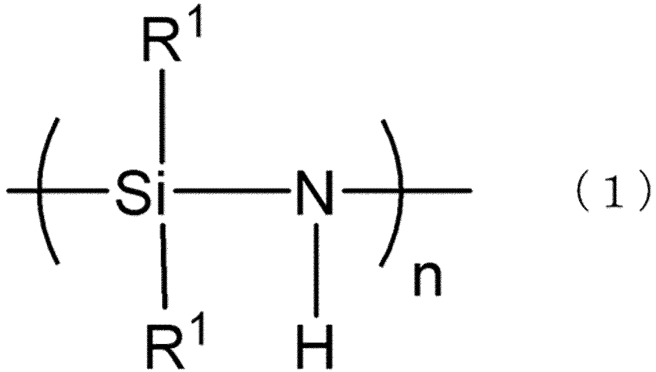 wherein R¹ independently represents a hydrogen atom or a group selected from an aliphatic hydrocarbon group having 1 to 6 carbon atoms, an aromatic hydrocarbon group having 6 to 12 carbon atoms, and an alkoxy group having 1 to 6 carbon atoms, and "n" represents an integer of 2 to 20,000,
(B) a surfactant represented by the following formula (2); 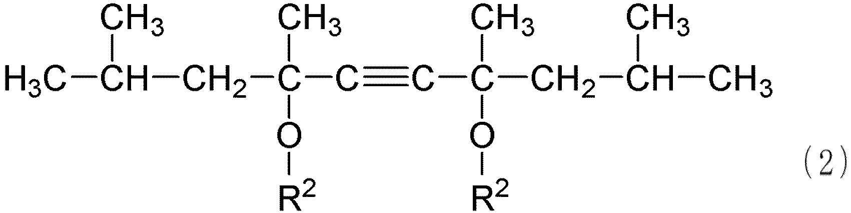 wherein R² independently represents a hydrogen atom or a group selected from an aliphatic hydrocarbon group having 1 to 6 carbon atoms, an ω-hydroxyalkyl group having 1 to 12 carbon atoms, and an w-alkoxyalkyl group having 2 to 12 carbon atoms, and
(C) an organic solvent.

The coating composition as above can form the highly uniform coating without defects such as pinholes.

The polysilazane compound of the component (A) is preferably perhydropolysilazane.

The coating composition as above can provide the coating having an excellent gas-barrier property after curing.

R² in the formula (2) of the component (B) preferably represents a hydrogen atom.

The coating composition as above can form the highly uniform coating without a reaction of the component (B) with the used polysilazane compound to case gelation and generation of a precipitate.

The organic solvent of the component (C) preferably includes an ether compound or an ester compound.

The coating composition as above provides the composition having excellence in solubility of the polysilazane compound and the surfactant, and in wettability on an inorganic material and an organic material, etc.

### ADVANTAGEOUS EFFECTS OF INVENTION

As noted above, the coating composition of the present invention whithout the reaction of the surfactant of the component (B) with the polysilazane compound to cause gelating and generation of a precipitate. The present coating composition has excellence in solubility of the polysilazane compound and the surfactant, and in wettability on an inorganic material and an organic material, etc. In addition, the present coating composition can form the highly uniform coating without defects such as pinholes due to the surfactant that does not deteriorate the polysilazane. The film having the coating formed with the coating composition of the present invention can yield a film having higher gas-barrier performance than the conventional film.

### BRIEF DESCRIPTION OF DRAWINGS

FIG. 1 is an image of white light interferometric film thickness measurement in Example 4; and
FIG. 2 is an image of white light interferometric film thickness measurement in Comparative Example 1.

### DESCRIPTION OF EMBODIMENTS

As noted above, there has been a demand for a coating having high uniformity without defects such as pinholes, and a film having high gas-barrier performance with the coating.

The present inventors have earnestly studies the above problems, and consequently found that the coating having high uniformity without defects such as pinholes can be provided by a coating composition containing: a polysilazane compound having a repeating structural unit of a specific structure; a surfactant having a structure represented by a formula (2); and an organic solvent. This finding has led to completion of the present invention.

Hereinafter, the present invention will be described in detail, but the present invention is not limited thereto.

Specifically, the present invention is a coating composition containing the following (A), (B), and (C).

### (A) Polysilazane Compound

(A) Polysilazane Compound Having Repeating Structure Represented by Following Formula (1) 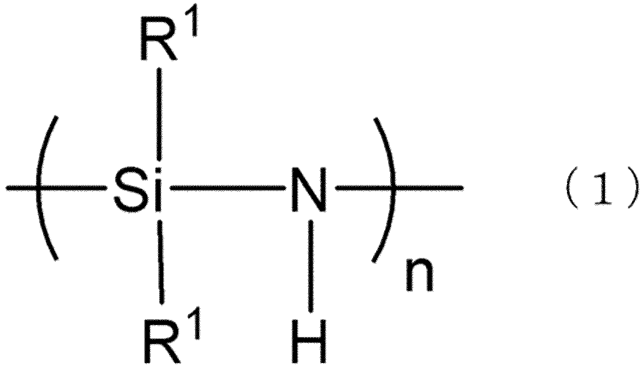 In the formula, R¹ independently represents a hydrogen atom or a group selected from an aliphatic hydrocarbon group having 1 to 6 carbon atoms, an aromatic hydrocarbon group having 6 to 12 carbon atoms, and an alkoxy group having 1 to 6 carbon atoms. "n" represents an integer of 2 to 20,000.

Examples of R¹ include: a hydrogen atom; aliphatic hydrocarbon groups such as a methyl group, an ethyl group, a propyl group, a butyl group, a pentyl group, a hexyl group, and a cyclohexyl group; aromatic hydrocarbon groups such as a phenyl group, a tolyl group, a benzyl group, and a naphthyl group; and alkoxy groups such as a methoxy group, an ethoxy group, a propoxy group, and a butoxy group. Among these, a hydrogen atom is preferable.

"n" represents an integer of 2 to 20,000, and preferably an integer of 60 to 10,000. "n" of more than 20,000 is unpreferable because solubility in the organic solvent decreases.

Examples of the component (A) include perhydropolysilazane, methylpolysilazane, dimethylpolysilazne, phenylpolysilazane, methylphenylpolysilazane, and modified polysilazane such as vinylpolysilazane. The component (A) may contain a polysilazane mixture selected from one or two or more of the above, and a polysilazane copolymer composed of two or more polysilazane structures.

Among these, perhydropolysilazane is most preferable from the viewpoint of the gas-barrier property after curing.

The polysilazane compound has a weight-average molecular weight within a range of preferably 100 to 1,000,000, preferably 1,000 to 500,000, and more preferably 3,000 to 100,000 from the viewpoints of solubility in (C) the organic solvent, described later, and operability in applying. The weight-average molecular weight of 100 or more hardly causes evaporation during drying of the organic solvent and a curing treatment, and causes no risk of deterioration in quality of the coating film, which is preferable. The weight-average molecular weight of 1,000,000 or less yields good solubility in the organic solvent, which is preferable. In the present invention, the weight-average molecular weight refers to a value measured under the following condition with polystyrene as a standard substance.

### Measurement Condition

Developing solvent: Tetrahydrofuran (THF)
Flow rate: 0.6 mL/min
Detector: UV detector
Column: TSK Guardcolumn SuperH-L
   TSKgel SuperMultipore HZ-M (4.6 mm I.D. × 15 cm × 4)
   (All the above are available from Tosoh Corporation)
Column temperature: 40°C
Injection amount of sample: 20 µL (a THF solution at a concentration of 0.5 weight%)

### (B) Surfactant

(B) Surfactant Represented by Following Formula (2) 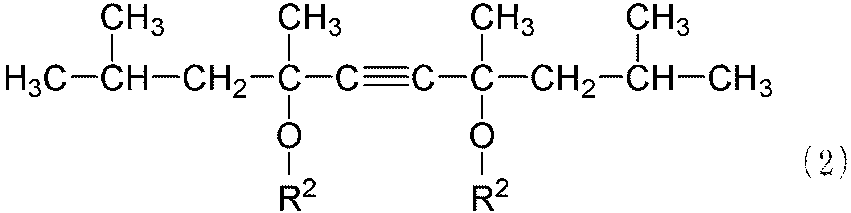 In the formula, R² independently represents a hydrogen atom or a group selected from an aliphatic hydrocarbon group having 1 to 6 carbon atoms, an ω-hydroxyalkyl group having 1 to 12 carbon atoms, and an w-alkoxyalkyl group having 2 to 12 carbon atoms.

As the surfactant used in the coating composition, the surfactant that does not react with the polysilazane compound to cause gelating and generating no precipitate needs to be selected. Since the polysilazane compound easily reacts with a highly polar substance, anionic surfactants and cationic surfactants, which are ionic, are hardly usable. Although nonionic surfactants, which are non-ionic, hardly react with the polysilazane, when dispersed in water or an alcohol solvent or when containing a remaining solvent, etc. as a remaining component in production, there is a problem of reaction between the solvent and the polysilazane. The component (B) of the present invention, represented by the formula (2), can be stably dispersed when added into the polysilazane compound, and can improve the gas-barrier property due to the effects of improving wettability, removing bubbles in applying, etc.

Specific examples of R² in the formula (2) include: a hydrogen atom; aliphatic hydrocarbon groups such as a methyl group, an ethyl group, a propyl group, a butyl group, a pentyl group, a hexyl group, and a cyclohexyl group; w-hydroxyalkyl groups such as an ω-hydroxymethyl group, an w-hydroxyethyl group, an ω-hydroxypropyl group, and an ω-hydroxybutyl group; and w-alkoxyalkyl groups such as an ω-methoxymethyl group, an ω-ethoxymethyl group, an ω-ethoxyethyl group, an ω-propoxyethyl group, and an w-butoxyethyl group.

Specific examples of the component (B) in the present invention include 2,4,7,9-tetramethyl-5-decyne-4,7-diol, 2,4,7,9-tetramethyl-5-decyne-4,7-dimethoxy, 2,4,7,9-tetramethyl-5-decyne-4,7-di(ethylene glycol), and 2,4,7,9-tetramethyl-5-decyne-4,7-di(ethylene glycol monomethyl ether). Among these, from the viewpoint of compatibility with (A) the polysilazane compound and (C) the organic solvent, preferable is 2,4,7,9-tetramethyl-5-decyne-4,7-diol in which R² in the formula (2) corresponds to a hydrogen atom.

An addition amount of the surfactant represented by the formula (2) may be freely set according to the required wettability and defoaming property. The addition amount of the surfactant is preferably within a range of 0.01 to 5 mass%, and more preferably within a range of 0.1 to 1 mass% relative to the entirety of the coating composition. The addition amount of the surfactant represented by the formula (2) of 0.01% or more is preferable in the point that the effects of the wettability and the defoaming property are sufficiently exhibited. The addition amount of 5% or less is preferable in the point that the gas-barrier performance is not impaired.

### (C) Organic Solvent

The organic solvent of the component (C) in the present invention has a purpose of diluting (A) the polysilazane compound to a concentration suitable for applying, and may be used at any concentration relative to the (A) polysilazane compound and the (B) surfactant to be used. Examples of the organic solvent include: alkane compounds such as n-hexane, n-octane, and n-nonane; alkene compounds such as 1-octene, 1-nonene, and 1-decene; cycloalkane compounds such as cyclohexane, methylcyclohexane, and dimethylcyclohexane; ester compounds such as n-propyl acetate, isopropyl acetate, n-butyl acetate, isobutyl acetate, isoamyl acetate, and ethyl caproate; and ether compounds such as diethyl ether, dibutyl ether, and ethylene glycol diethyl ether.

Among these, the organic solvent is preferably the ether compound or the ester compound, and particularly preferably dibutyl ether or butyl acetate from the viewpoints of solubility of the polysilazane compound and the surfactant, and wettability on an inorganic material or an organic material, etc.

A mixing ratio between the polysilazane compound and the solvent is preferably within a range of 0.1/99.9 to 20/80, more preferably 1/99 to 20/80, and further preferably within a range of 2.5/97.5 to 20/80 at a mass ratio. The mixing ratio within this range is preferable because of yielding good storage stability, coatability etc., and enabling to apply the composition thickly at once.

### Additive

The coating composition of the present invention may contain additives such as a catalyst, a filler, a UV absorbing agent, and an antioxidant, in addition to the components (A) to (C). Examples of the additive include a curing catalyst, a filler, a UV absorbing agent, and a UV scattering agent. Examples of the curing catalyst include: homogeneous or heterogeneous metal catalysts containing a metal element such as magnesium, aluminum, titanium, vanadium, chromium, manganese, iron, cobalt, zinc, gallium, zirconium, niobium, palladium, and platinum; and amine catalysts such as aliphatic amines such as methylamine, dimethylamine, trimethylamine, ethylamine, diethylamine, triethylamine, ethylenediamine, and tetramethylethylenediamine, aliphatic aminoalcohols such as methylaminoethanol and dimethylaminoethanol, aromatic amines such as aniline, phenylethylamine, and toluidine, and heterocyclic amines such as pyrrolidine, piperidine, piperazine, pyrrole, pyrazole, imidazole, pyridine, pyridazine, pyrimidine, and pyrazine. The most preferable curing catalyst is appropriately selected according to the curing method and temperature to be used.

Examples of the filler include: reinforcing inorganic fillers such as fumed silica, fumed titanium dioxide, and fumed alumina; and inorganic fillers such as fused silica, alumina, zirconium oxide, calcium carbonate, calcium silicate, titanium dioxide, ferric oxide, and zinc oxide. The filler is added mainly for purposes of relaxing curing shrinkage of the polysilazane compound of the component (A), absorbing UV and scattering UV. The additives described above are an example, and any additive other than the above to impart required properties may be added at any amount.

### Substrate

The substrate is not particularly limited as long as the substrate can be applied by the coating composition of the present invention.
When the composition is used for application requiring flexibility, such as the organic EL and the perovskite solar cell, the substrate is preferably an organic resin film. As the organic resin, for example: general-purpose plastics such as polyethylene (PE), polypropylene (PP), polyvinyl chloride (PVC), polystyrene (PS), polyvinyl acetate (PVAc), polyurethane (PUR), polytetrafluoroethylene (PTFE), acrylonitrile-butadiene-styrene resin (ABS), and acrylic resin (PMMA); engineering plastics such as polyamide (PA), nylon, polycarbonate (PC), polyethylene terephthalate (PET), and polybutylene terephthalate (PBT); super engineering plastics such as amorphous polyacrylate (PAR), polysulfone (PSF), thermoplastic polyimide (PI), and polyetherimide (PEI); etc. are preferable. Among these, PET and PC, which are industrially widely used, are more preferable from the viewpoints of a price, light transmittance, and processability.

The shape of the substrate is not particularly limited as long as the shape can be coated. For example, a film-shaped substrate is suitable as the film having an excellent gas-barrier property. To remove a stain or an adsorbate on the substrate surface, a surface treatment may be performed in advance before applying. Examples of a method for the surface treatment include an argon-plasma treatment, an oxygen-plasma treatment, an ozone treatment, a UV irradiation treatment, a xenon excimer light irradiation treatment, a blast treatment, and washing with a solvent. A treatment with a primer or a surface-treating agent may be performed.

### Method of Using Coating Composition

The coating composition of the present invention can be used as it is similarly to the conventional coating composition. Examples of the method for applying the coating composition on the substrate include: roll coating methods such as a chamber doctor coater, a single-roll kiss coater, a reverse kiss coater, a bar coater, a reverse roll coater, a forward-rotation roll coater, a blade coater, and a knife coater; a spin-coating method, a dispense method, a dip method, a spray method, a transferring method, and a slit coat method.

The coating film of the coating composition applied by the above method is preferably subjected to a drying step before the curing treatment in terms of a property aspect after curing, but the drying step may be omitted when volatile components such as the solvent used until the curing treatment step has been sufficiently volatilized. In the case of the heating curing treatment, the solvent is volatilized prior to curing of the polysilazane compound in the composition during the curing treatment step, and thereby the drying step may be omitted also in this case. In contrast, if the curing treatment is performed before sufficient volatilization of the solvent, the solvent remains in the cured film to deteriorate physical properties of the cured film. Further, reheating can cause the solvent to vaporize, and can lead to appearance defects such as voids and cracks.

A method of curing the polysilazane coating film is typically mainly heating or radiating energy ray, but the curing method is unnecessarily limited thereto. In the case of heating curing treatment, since a curing reaction temperature of the polysilazane itself is extremely high, it is expected that the thermoplastic resin to be the substrate cannot be durable. Thus, the catalyst for thermal curing is preferably added into the polysilazane in advance. The curing time is about one day at 150°C without the catalyst, but the polysilazane coating film is sufficiently cured about 1 to 3 hours at 150°C when adding the catalyst, although depending on the addition amount. In the case of energy ray irradiation, a photo-radical generator, etc. may be added in advance, but the curing sufficiently proceeds even if no photoradical generator is added.. In particular, in the case that the wavelength is 200 nm or less such as with xenon excimer light, thus most of the irradiated light is absorbed by polysilane, so that curing is completed in a short time.

A thickness of the coating film is not particularly limited as long as it is a thick enough that the polysilazane does not crack due to curing shrinkage during the curing, but preferably within a range of 0.01 to 20 µm. The film thickness of 0.01 µm or more is preferable because the effect of inhibiting precipitation of an oligomer due to the polysilazane, the gas-barrier property and solvent resistance are sufficiently exhibited. The film thickness of 20 µm or less is preferable because the film has excellent flexibility to hardly cause cracking or peeling when the composition is applied on the substrate having flexibility, such as a thermoplastic resin film. The barrier film with the cured product of the polysilazane may be a single layer, or may be a plurality of layers of two or more layers.

The coating of the present invention obtained as above causes few film defects such as pinholes, and improves the gas-barrier property compared with the coating formed with a coating composition containing the conventional polysilazane.

### EXAMPLE

Hereinafter, the present invention will be specifically described by using Examples and Comparative Examples, but the present invention is not limited thereto.

### Evaluation Methods

Coated films prepared in Examples and Comparative Examples were subjected to evaluations of coating film performance.

### Measurement of Water-Vapor Permeability

The water-vapor permeability was measured by using Lyssy L80-5000 (available from Systech Instruments Limited) water-vapor permeability meter in accordance with JIS Z 0208:1976 by a cup method at 40°C and 90% RH. A water-vapor permeability of 0.1 g/m²/day, which was near the measurement lower limit of the cup method, or less was measured by a Mocon method in accordance with JIS K 7129B:2019. The water-vapor permeability of 30 g/m²/day or more was evaluated as failure, and the water-vapor permeability of less than 30 g/m²/day was evaluated as passing.

### Test of Uniform Coatability of Coating Film

Surface roughness and a number of pinholes on the coating film were measured, and uniform coatability of the coating film was evaluated. The surface roughness was measured by using a laser microscope equipped with VK-X3000 (available from KEYENCE CORPORATION) white light interferometer. The measurement was performed by using a white interferometric method on a random surface with 1.0 mm × 1.5 mm in size, and an arithmetic average height Sa was determined as an index of the surface roughness. The Sa of less than 0.03 µm was evaluated as passing.

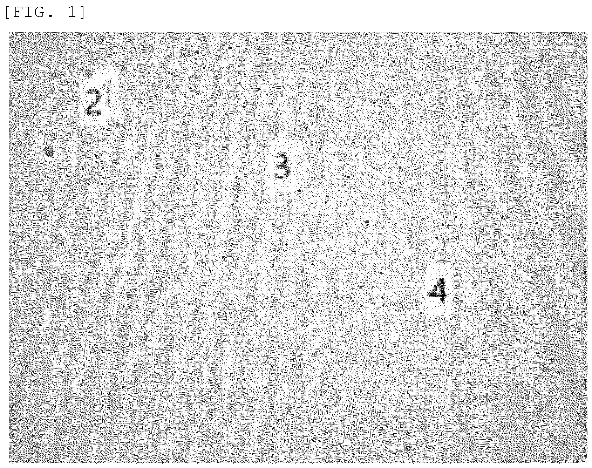

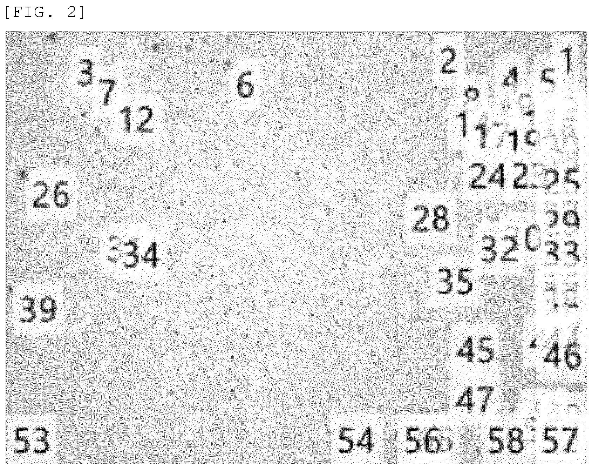

FIG. 1 and FIG. 2 show images of the white interferometric film thickness measurement in Example 4 and Comparative Example 1. Portions described with numbers are pinholes.

In the measured surface, a number of depressed portions having a depth of 80% or more of film thickness of the coating film were measured as the pinholes. The number of 50 or more was evaluated as failure, and the number of less than 50 was evaluated as passing.

### Example 1

Into a prepared polysilazane solution at a blending ratio of 5 parts of perhydropolysilazane having a weight-average molecular weight of 8,600 and 95 parts of dibutyl ether being a diluting solvent, 0.1 part of 2,4,7,9-tetramethyl-5-decyne-4,7-diol was added as a surfactant. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The water-vapor permeability of the film after curing was measured to be 0.18 g/m²/day. The arithmetic average height Sa of the coating film surface was 0.020 µm, and a number of pinholes in the measured surface was 18.

### Example 2

Into a prepared polysilazane solution at a blending ratio of 5 parts of perhydropolysilazane having a weight-average molecular weight of 8,600 and 95 parts of dibutyl ether being a diluting solvent, 0.5 parts of 2,4,7,9-tetramethyl-5-decyne-4,7-diol was added as a surfactant. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The water-vapor permeability of the film after curing was measured to be 0.21 g/m²/day. The arithmetic average height Sa of the coating film surface was 0.015 µm, and a number of pinholes in the measured surface was 6.

### Example 3

Into a prepared polysilazane solution at a blending ratio of 5 parts of perhydropolysilazane having a weight-average molecular weight of 8,600 and 95 parts of dibutyl ether being a diluting solvent, 1 part of 2,4,7,9-tetramethyl-5-decyne-4,7-diol was added as a surfactant. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The water-vapor permeability of the film after curing was measured to be 0.20 g/m²/day. The arithmetic average height Sa of the coating film surface was 0.011 µm, and a number of pinholes in the measured surface was 4.

### Example 4

Into a prepared polysilazane solution at a blending ratio of 5 parts of perhydropolysilazane having a weight-average molecular weight of 8,600 and 95 parts of dibutyl ether being a diluting solvent, 0.5 parts of 2,4,7,9-tetramethyl-5-decyne-4,7-diol was added as a surfactant. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The coating was further performed in the same manner to perform stacking coating of two layers in total. The water-vapor permeability of the film after curing was measured to be 0.005 g/m²/day. The arithmetic average height Sa of the coating film surface was 0.013 µm, and a number of pinholes in the measured surface was 4.

### Example 5

Into a prepared polysilazane solution at a blending ratio of 2 parts of perhydropolysilazane having a weight-average molecular weight of 8,600 and 98 parts of dibutyl ether being a diluting solvent, 0.5 parts of 2,4,7,9-tetramethyl-5-decyne-4,7-diol was added as a surfactant. This polysilazane solution was applied on a polyimide film with 75 µm in thickness with a bar coater so that a film thickness after drying was 0.2 µm. Thereafter, the film was dried by heating at 100°C for 10 minutes, and irradiated with Xe excimer at 4,000 mJ/cm² for a curing treatment. The coating was further performed in the same manner to perform stacking coating of two layers in total. The water-vapor permeability of the film after curing was measured to be 0.008 g/m²/day. The arithmetic average height Sa of the coating film surface was 0.015 µm, and a number of pinholes in the measured surface was 6.

### Example 6

Into a prepared polysilazane solution at a blending ratio of 4 parts of perhydropolysilazane having a weight-average molecular weight of 8,600, 1 part of monomethylpolysilazane having a weight-average molecular weight of 3,500, and 95 parts of dibutyl ether being a diluting solvent, 0.5 parts of 2,4,7,9-tetramethyl-5-decyne-4,7-diol was added as a surfactant. This polysilazane solution was applied on a polyimide film with 75 µm in thickness with a bar coater so that a film thickness after drying was 0.5 µm. Thereafter, the film was dried by heating at 100°C for 10 minutes, and irradiated with Xe excimer at 4,000 mJ/cm² for a curing treatment. The coating was further performed in the same manner to perform stacking coating of two layers in total. The water-vapor permeability of the film after curing was measured to be 0.11 g/m²/day. The arithmetic average height Sa of the coating film surface was 0.018 µm, and a number of pinholes in the measured surface was 11.

### Example 7

Into a prepared polysilazane solution at a blending ratio of 5 parts of dimethylpolysilazane having a weight-average molecular weight of 2,400 and 95 parts of dibutyl ether being a diluting solvent, 0.5 parts of 2,4,7,9-tetramethyl-5-decyne-4,7-diol was added as a surfactant. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The water-vapor permeability of the film after curing was measured to be 20.8 g/m²/day. The arithmetic average height Sa of the coating film surface was 0.021 µm, and a number of pinholes in the measured surface was 10.

### Comparative Example 1

Prepared was a polysilazane solution at a blending ratio of 5 parts of perhydropolysilazane having a weight-average molecular weight of 8,600 and 95 parts of dibutyl ether being a diluting solvent. This polysilazane solution was applied on a polyimide film with 75 µm in thickness with a bar coater so that a film thickness after drying was 0.4 µm. Thereafter, the film was dried by heating at 100°C for 10 minutes, and irradiated with Xe excimer at 4,000 mJ/cm² for a curing treatment. The water-vapor permeability of the film after curing was measured to be 0.40 g/m²/day. The arithmetic average height Sa of the coating film surface was 0.027 µm, and a number of pinholes in the measured surface was 58.

### Comparative Example 2

Into a prepared polysilazane solution at a blending ratio of 5 parts of perhydropolysilazane having a weight-average molecular weight of 8,600 and 95 parts of dibutyl ether being a diluting solvent, 0.5 parts of dialkyldimethylammonium chloride (trade name: Di-n-alkyldimethylammonium Chloride (mixture): available from Tokyo Chemical Industry Co., Ltd.) was added as a surfactant. The polysilazane solution after the addition gelled, and thus the evaluation was interrupted.

### Comparative Example 3

Into a prepared polysilazane solution at a blending ratio of 5 parts of perhydropolysilazane having a weight-average molecular weight of 8,600 and 95 parts of dibutyl ether being a diluting solvent, 0.5 parts of 3,3-dimethyl-1-butyne was added as a surfactant. This polysilazane solution was applied on a polyimide film with 75 µm in thickness with a bar coater so that a film thickness after drying was 0.5 µm. Thereafter, the film was dried by heating at 100°C for 10 minutes, and irradiated with Xe excimer at 4,000 mJ/cm² for a curing treatment. On the film surface after curing, streaky unevenness was generated, and thus the evaluation was interrupted.

### Comparative Example 4

Into a prepared polysilazane solution at a blending ratio of 5 parts of perhydropolysilazane having a weight-average molecular weight of 8,600 and 95 parts of dibutyl ether being a diluting solvent, 0.5 parts of 2-methyl-3-butyn-2-ol was added as a surfactant. After the addition, small gel was precipitated in the polysilazane solution, and thus the evaluation was interrupted.

Table 1 shows the summary of Examples and Comparative Examples.

**[Table 1]**

| | Polysilazane compound | | Surfactant | | Solvent | Substrate | Number of layers | Arithmetic average height Sa (µm) | Number of pinholes | Water-vapor permeability (g/m²/day) |
|---|---|---|---|---|---|---|---|---|---|---|
| | Type | Concentration | Type | Addition amount (%) | Type | | | | | |
| Example 1 | Perhydropolysilazane | 5 | 2,4,7,9-Tetramethyl-5-decyne-4,7-diol | 0.1 | DBE | PI | 1 | 0.020 | 18 | 0.18 |
| Example 2 | Perhydropolysilazane | 5 | 2,4,7,9-Tetramethyl-5-decyne-4,7-diol | 0.5 | DBE | PI | 1 | 0.015 | 6 | 0.21 |
| Example 3 | Perhydropolysilazane | 5 | 2,4,7,9-Tetramethyl-5-decyne-4,7-diol | 1 | DBE | PI | 1 | 0.011 | 4 | 0.20 |
| Example 4 | Perhydropolysilazane | 5 | 2,4,7,9-Tetramethyl-5-decyne-4,7-diol | 0.5 | DBE | PI | 2 | 0.013 | 4 | 0.005 |
| Example 5 | Perhydropolysilazane | 2 | 2,4,7,9-Tetramethyl-5-decyne-4,7-diol | 0.5 | DBE | PI | 2 | 0.015 | 6 | 0.008 |
| Example 6 | Perhydro/ monomethylpolysilazane | 5 | 2,4,7,9-Tetramethyl-5-decyne-4,7-diol | 0.5 | DBE | PI | 2 | 0.018 | 11 | 0.11 |
| Example 7 | Dimethylpolysilazane | 5 | 2,4,7,9-Tetramethyl-5-decyne-4,7-diol | 0.5 | DBE | PI | 1 | 0.021 | 10 | 20.8 |
| Comparative Example 1 | Perhydropolysilazane | 5 | - | - | DBE | PI | 1 | 0.027 | 58 | 0.40 |
| Comparative Example 2 | Perhydropolysilazane | 5 | Dialkyldimethylammonium chloride | 0.5 | DBE | PI | 1 | - | - | - |
| Comparative Example 3 | Perhydropolysilazane | 5 | 3,3-Dimethyl-1-butyne | 0.5 | DBE | PI | 1 | - | - | - |
| Comparative Example 4 | Perhydropolysilazane | 5 | 2-Methyl-3-butyn-2-ol | 0.5 | DBE | PI | 1 | - | - | - |

From the results in Table 1, the coating film produced from the polysilazane solution of Comparative Example 1 containing no surfactant generated 58 pinholes, and the uniform coatability of the coating film was failure. In the polysilazane solutions of Comparative Examples 2 to 4, which used the surfactants other than the surfactant of the present invention, the surfactant reacted with the polysilazane to destabilize the polysilazane solution, which caused gelation or coating unevenness in the coating film to fail to form the good coating film.

Meanwhile, the coating films produced from the polysilazane solution of the present invention (Examples 1 to 7) all exhibited passed evaluations of the arithmetic average height Sa and pinholes, and the uniform coating film was formed. In addition, these coating films exhibited low water-vapor permeability of the polyimide film. It is presumed that the reduction in pinholes and voids on the film during coating due to the effect of the surfactant of the present invention contributes to the reduction in water-vapor permeability.

From comparison between Examples 6 and 7 and Examples 1 to 5, it was found that, as for the polysilazane used in the present invention, the polysilazane using the perhydropolysilazane exhibited low water-vapor permeability and was particularly preferable.

From the above, it was found that use of the polysilazane compound and the surfactant of the present invention yielded the uniform coating film, few pinholes, and a high gas-barrier property.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

The present description includes the following embodiments.
[1]: A coating composition, comprising:
   (A) a polysilazane compound having a repeating structure represented by the following formula (1); 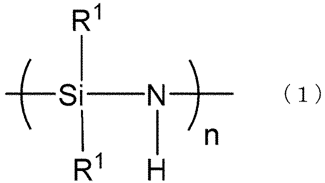 wherein R¹ independently represents a hydrogen atom or a group selected from an aliphatic hydrocarbon group having 1 to 6 carbon atoms, an aromatic hydrocarbon group having 6 to 12 carbon atoms, and an alkoxy group having 1 to 6 carbon atoms, and "n" represents an integer of 2 to 20,000,
   (B) a surfactant represented by the following formula (2); 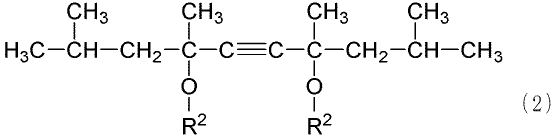 wherein R² independently represents a hydrogen atom or a group selected from an aliphatic hydrocarbon group having 1 to 6 carbon atoms, an ω-hydroxyalkyl group having 1 to 12 carbon atoms, and an w-alkoxyalkyl group having 2 to 12 carbon atoms, and
   (C) an organic solvent.
[2]: The coating composition according to [1], wherein the polysilazane compound of the component (A) is perhydropolysilazane.
[3]: The coating composition according to [1] or [2], wherein R² in the formula (2) of the component (B) represents a hydrogen atom.
[4]: The coating composition according to any one of [1] to [3], wherein the organic solvent of the component (C) comprises an ether compound or an ester compound.

## Claims

1. A coating composition, comprising:
(A) a polysilazane compound having a repeating structure represented by the following formula (1); 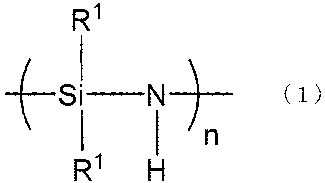 wherein R¹ independently represents a hydrogen atom or a group selected from an aliphatic hydrocarbon group having 1 to 6 carbon atoms, an aromatic hydrocarbon group having 6 to 12 carbon atoms, and an alkoxy group having 1 to 6 carbon atoms, and "n" represents an integer of 2 to 20,000,
(B) a surfactant represented by the following formula (2); 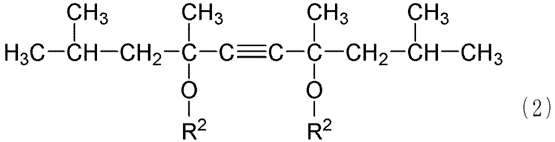 wherein R² independently represents a hydrogen atom or a group selected from an aliphatic hydrocarbon group having 1 to 6 carbon atoms, an ω-hydroxyalkyl group having 1 to 12 carbon atoms, and an w-alkoxyalkyl group having 2 to 12 carbon atoms, and
(C) an organic solvent.

2. The coating composition according to claim 1, wherein the polysilazane compound of the component (A) is perhydropolysilazane.

3. The coating composition according to claim 1 or 2, wherein R² in the formula (2) of the component (B) represents a hydrogen atom.

4. The coating composition according to any one of claims 1 to 3, wherein the organic solvent of the component (C) comprises an ether compound or an ester compound.
